# EUROPEAN PATENT SPECIFICATION

(11) **EP 3 629 399 B1**
(45) Date of publication and mention of the grant of the patent: **18.02.2026**
(21) Application number: 19199478.9
(22) Date of filing: 25.09.2019
(51) Int. Cl.: H01M 50/209, H01M 50/516, H01M 50/524

(54) **CELL-CONTACTING DEVICE FOR A BATTERY AND BATTERY**
ZELLENKONTAKTIERUNGSVORRICHTUNG FÜR EINE BATTERIE UND BATTERIE
DISPOSITIF DE MISE EN CONTACT DE CELLULES POUR BATTERIE ET BATTERIE

(30) Priority: 27.09.2018 DE 102018123956
(43) Date of publication of application: 01.04.2020
(73) Proprietor: TE Connectivity Germany GmbH, 64625 Bensheim (DE)
(72) Inventor: HAPP, Jonas, 68159 Mannheim (DE); HUBER, Jens, 64646 Heppenheim (DE); WALLNER, Stefan, 64678 Lindenfels (DE); CHRITZ, Gunther, 69488 Birkenau (DE)
(74) Representative: Patentanwaltskanzlei WILHELM & BECK

(56) References cited:
- EP-A1- 3 304 619
- EP-B1- 3 304 619
- DE-A1- 102008 034 876
- DE-B4- 102008 034 876
- US-A1- 2016 118 728
- US-A1- 2018 269 454

## Description

The invention relates to an electromechanical cell-contacting device for a battery module of a battery of a motor vehicle, in particular for a traction-battery module of a traction battery of a hybrid or electric motor vehicle. Furthermore, the invention relates to such a battery module and such a battery.

In the electrical industry (electronics, electrical engineering, electrical equipment, electrical power engineering, etc.), a large number of electrical connector devices or connector units, therefore connectors, are known, which serve to transmit electric currents, voltages, signals and/or data with a large range of currents, voltages, frequencies and/or data rates. In the low, medium or high voltage and/or current range, and in particular in the motor vehicle industry, such connectors must guarantee a transmission of electrical power, signals and/or data, in mechanically stressed, warm, possibly hot, contaminated, humid and/or chemically aggressive environments, permanently, repeatedly and/or at short notice after a comparatively long period of inactivity. On account of a wide range of applications, a large number of specially configured connectors is known.

High fuel costs and attempts to reduce environmental impacts make electric and hybrid vehicles necessary in the motor vehicle industry, for example. One aspect of such a motor vehicle is handling of high electric operating currents and/or voltages, wherein a relevant component, such as a battery for example, needs to be laid out accordingly. Such a battery is usually designed as a so-called traction battery, which serves to make electric drive energy available for an electric traction engine of the motor vehicle. The battery has an electric interconnection of electrochemical storage-cell modules, which are interconnected, for example, by means of an electromechanical cell-contacting device.

DE 10 2014 219 178 A1 discloses a cell-contacting device of a battery module of a battery of a motor vehicle, in particular of an electric or hybrid vehicle. The cell-contacting device has an in particular substantially plate-shaped support structure and several separately formed electromechanical contact elements for electrically contacting in each case exactly two directly mutually adjacent storage-cell modules of the battery module. The contact elements are arranged side-by-side in rows and fastened, in each case on one side, to supporting sections of the support structure. A mechanical connection between a supporting section and a relevant contact element takes place via a marginal weld point, wherein in each case a region of the contact elements opposite the weld point is freely movable.

US 2018/0269454 A1 teaches a high voltage traction battery assembly comprising an electric busbar having a free end section, an array of battery cells including an electric terminal having a socket with a plurality of electric contact spring leaves, and a connect assembly mechanically and electrically coupling the busbar to the terminal of the array of battery cells. Upon application of a push force, the free end section of the busbar urges the contact spring leaves away from one another such that the free end section of the busbar can be received in the socket. The free end section of the busbar may be formed substantially spherical or ovular with flat sides, wherein the shape of the socket corresponds to the shape of the free end section of the busbar.

US 2016/0118728 A1 discloses an electrical connector assembly including a cover and an electric conductive clip receivable in the cover. The conductive clip may be snap-fitted onto an electric intercell connector in a multi-cell battery. The cover is electrically nonconductive and may be snap-fitted over the conductive clip to protect the conductive clip and an electrical device wire connected to the conductive clip. The cover may include a wire management device to guide and protect an electrical wire such as the one connected to the conductive clip. Here, the wire management device serves to protect the device wire and/or an electrical connection between the conductive clip and a connector of the device wire.

EP 3 304 619 A1 teaches an electrical battery connector for an electric vehicle. The battery connector includes an electric connecting sheet having an electric fusing portion and a protective component in which the fusing portion is encased. The connecting sheet is configured to connect two adjacent batteries. A cross sectional area of the fusing portion is less than a cross sectional area of a rest part of the connecting sheet. And the protective component serves to shield an electric arc generated for the case that the fusing portion is melting.

DE 10 2008 034 876 A1 discloses a battery with a heat conducting plate arranged in a battery housing for tempering the battery. Here, a plurality of individual cells are connected electrically in parallel and/or in series with one another by means of a cell connector board in a heat-conducting manner to the heat-conducting plate. An areal spring element is provided, by means of which the individual cells can be pressed in a defined manner against the heat-conducting plate. Pretensioning elements are arranged on the cell connector board or on the heat conducting plate for pretensioning and fastening the spring element.

Since an electric drive of an electric or hybrid vehicle can call up a high electric current at short notice, the contact elements inserted between the storage-cell modules of a battery must have a corresponding electrical conductivity and must possess the ability to compensate varying distances between the storage-cell modules on account of manufacturing tolerances. Moreover, the contact elements must contact the contact mechanisms (anodes, cathodes) of the storage-cell modules securely, i.e. without interruptions, when there are vibrations. Furthermore, the contact elements should be simple to mount and be able to be produced inexpensively. - It is a problem of the invention to specify an improved electromechanical cell-contacting device for a battery module of a battery of a motor vehicle, in particular for a traction-battery module of a traction battery of a hybrid or electric motor vehicle.

The problem of the invention is solved by means of an electromechanical cell-contacting device for a battery module of a battery of a motor vehicle, in particular for a traction-battery module of a traction battery of a hybrid or electric motor vehicle; and by means of a battery module or a battery for a motor vehicle, in particular of a traction-battery module or of a traction battery for a hybrid vehicle or an electric motor vehicle; in accordance with the independent claims. - Advantageous further developments, additional features and/or advantages of the invention arise from the dependent claims and the following description.

The cell-contacting device according to the invention comprises a mechanical cell-connector support which can be fitted onto storage-cell modules of a battery module and a plurality of electromechanical cell-connector sheets. The cell-contacting device is further formed in such a way that the plurality of cell-connector sheets can be installed or are installed on/in the cell-connector support, wherein a relevant cell-connector sheet can be mounted or is mounted on/in the cell-connector support by means of at least one snap-fit arrangement of the cell-connector support. In this way, the cell-connector sheet can be installed or is installed preferably in sections on/in the cell-connector support in a substantially form-fitting manner.

Such a cell-contacting device is often also referred to as a cell-contacting system. Furthermore, the battery or the battery module can also be referred to as an accumulator or an accumulator module. - In accordance with the invention, the cell-contacting device can be laid out for all storage-cell modules or only some of the storage-cell modules, that is e.g. for a battery module, often also referred to as a battery package, of the battery module. This means also that a battery can comprise a single battery module or a plurality of battery modules. - A single storage-cell module can comprise a single storage cell or a plurality of storage cells. - At least two preferably directly mutually adjacent electromechanical cell poles of at least two storage-cell modules can be electrically connected or are electrically connected to one another by means of a single cell-connector sheet.

A form-fitting installation in sections ('mountable', mountability) or installed state ('mounted', mountedness) of the cell-connector sheet by means of the snap-fit arrangement on/in the cell-connector support is to be understood to mean the following general mainly or substantially two-dimensional configuration. - The cell-connector sheet has at least one border, preferably an outer border, and the cell-connector support has at least one border relevant to this outer border, preferably an inner border, wherein the two borders possess a mainly or substantially identical profile. An optionally installed gap and/or tolerances (layout, manufacture etc.) are not to be taken into account in this case.

In this case, one border is mainly or substantially formed like a positive or negative in relation to a negative or positive of the other border (form-fitting connection). This means the borders are formed in a complementary manner, with a simple profile of the borders being a rectilinear one. This is also a preferred form for the invention. This means, in such a case, the two borders lie substantially parallel to one another. Another common profile of two relevant borders can of course be applied. - Furthermore, the wording 'in a form-fitting manner in sections' should also be understood to mean 'in a form-fitting manner at least in sections'.

The invention discloses a locking mechanism with at least one snap-fit arrangement in a cell-connector support for cell-connector sheets inside a cell-contacting device. The form-fitting connection serves to adapt to position tolerances of the cell poles of the storage-cell modules, of the battery module or of the battery, to which the cell-connector sheets can be welded or are welded. Using such a locking geometry, the cell-connector sheets can furthermore be secured during transportation.

In one embodiment, the cell-connector sheet, on two of its mutually opposed sides, can be installed or is installed in each case in sections on/in the cell-connector support in a substantially form-fitting manner. These two sides are, for example, the longitudinal sides of the cell-connector sheet which extend in the longitudinal direction (also possible are transverse sides, for example). Furthermore, the cell-connector sheet, additionally on its third side and optionally additionally on its fourth side, can be installed or is installed in each case in sections on/in the cell-connector support in a substantially form-fitting manner. These two sides are, for example, the transverse sides of the cell-connector sheet which extend in the transverse direction (also possible are longitudinal sides, for example).

The snap-fit arrangement can be formed in such a way, and/or a form-fitting connection between the cell-connector sheet and the cell-connector support can permit, that position tolerances from electric cell poles of the storage-cell modules can be compensated. Such position tolerances exist, for example, in a vertical direction of the battery module, such that on the one hand the snap-fit arrangement here should permit a certain mobility of the cell-connector sheet and/or on the other hand the form-fitting connection is installed in a plane perpendicular thereto (which, analogously to the above, is spanned for example by a longitudinal direction and a transverse direction). In this case, the snap-fit arrangement and/or the form-fitting connection furthermore functions as securing means for the cell-connector sheet during transportation.

In one embodiment, a two-dimensional inner contour of the cell-connector support can be formed to be substantially analogous to a relevant two-dimensional outer contour of the cell-connector sheet. Furthermore, an unobstructed inner shape of the cell-connector support can be formed to be substantially analogous to an unobstructed outer shape of the cell-connector sheet, at least in sections or substantially completely. Moreover, the cell-contacting device can be formed in such a way that, in this way, a plurality (of at least two) or a multiplicity of (at least three, four, five, six, seven, eight, nine, ten etc.) cell-connector sheets can be installed or are installed on/in the cell-connector support in a form-fitting manner. - The cell-connector support can extend in a planar manner substantially in a longitudinal direction and a transverse direction of the cell-contacting device.

The cell-connector sheet can be installed or is installed on/in the cell-contacting device substantially by a linear movement in a longitudinal direction, a transverse direction and/or a vertical direction of the cell-contacting device. - This takes place, for example, by a substantially linear-lateral plugging of the cell-connector sheet onto/into the cell-connector support. Furthermore, this can be a mounting from above, for example, in which the cell-connector sheet can be installed or is installed substantially linearly in the vertical direction on/in the cell-contacting device. It is of course possible to apply another form of an optionally composed linear movement.

The cell-connector sheet can be installable or can be installed on/in the cell-contacting device substantially by a rotational movement about a longitudinal axis, a transverse axis and/or a vertical axis of the cell-contacting device. This can take place, for example, by a pivoting movement of the cell-connector sheet on the cell-contacting device. It is of course possible to apply another form of an optionally composed rotational movement. - Of course, in this case at least one linear movement can be combined with and/or simultaneously coupled to at least one rotational movement.

At a chronological end section of the mounting, the snap-fit arrangement snaps closed, i.e. it locks the cell-connector sheet to/in the cell-contacting device. - The cell-connector support and the cell-connector sheet can be formed in relation to one another in such a way that, when mounting the cell-connector sheet on/in the cell-connector support, the cell-connector sheet firstly can be placed with an outer border, in particular an outer longitudinal border, at/onto the cell-connector support, and subsequently can be pivoted onto the cell-connector support towards and into this, and further subsequently can be displaced in the plane of the cell-connector support.

A locking of the cell-connector sheet takes place, for example, with three movements, which are distinguishable from one another and adjoin one another directly and/or merge into one another (fitting/inserting, pivoting, displacing of the cell-connector sheet) of the cell-connector sheet towards the cell-connector support (the cell-connector support remains stationary in this case), in order to guarantee the form-fitting installation of the cell-connector sheet on/in the cell-connector support. This mounting movement, in combination with a geometry of the cell-connector sheet, permits clean edges on the cell-connector sheet. In the final step (displacement of the cell-connector sheet in the plane of the cell-connector support) the snap-fit arrangement snaps closed and locks the cell-connector sheet on/in the cell-connector support.

In one embodiment, the snap-fit arrangement has at least one substantially spring-loadable latching mechanism and at least one substantially rigid latching device. In this case, the cell-connector sheet can be installed or is installed between the spring-loadable latching mechanism and the rigid latching device, wherein the latching mechanism and the latching device are formed to interact in such a way that the cell-connector sheet is secured against falling out of the cell-connector support.

The substantially rigid latching device can be formed, for example, as a wall, a latching element, a latching projection, a latching lug, a latching shoulder, a latching border, a latching edge, a latching recess etc. - The substantially spring-loadable latching mechanism which can interact therewith or interacts therewith can be formed, for example, as a latching spring, a latching arm, a latching tab etc. The snap-fit arrangement or the spring-loadable latching mechanism is flexible or spring-loadable enough, on the one hand, to be displaced during the mounting of the cell-connector sheet and, on the other hand, to also later guarantee a required retaining force (transportation etc.).

In one embodiment, the cell-connector support comprises at least one support frame, on/in which the at least one cell-connector sheet can be mounted or is mounted by means of the at least one snap-fit arrangement. In this case, the cell-connector support can be substantially identical to the support frame. Preferably, the cell-connector support has exactly two support frames, one for the anodes of the battery module and one for the cathodes of the battery module. Another number can be installed, of course. Moreover, the cell-connector support can have, besides the support frame, at least one further device and/or mechanism.

In one embodiment, the support frame can be provided on a base bar of the cell-connector support, wherein the base bar can be provided or is provided preferably between the respective two cell poles of the storage-cell modules. Furthermore, the support frame can be formed at least partially or completely in a circumferential manner, with the base bar as one side. - The spring-loadable latching mechanism can have a latching spring which is spring-loadable in the transverse direction or longitudinal direction. Furthermore, the/a latching spring can be installed to be spring-loadable substantially parallel to the transverse direction or longitudinal direction. Moreover, the/a latching spring can be formed on the base bar or support frame. Moreover, the/a latching spring can be formed as a leaf spring, in particular a single-layer leaf spring.

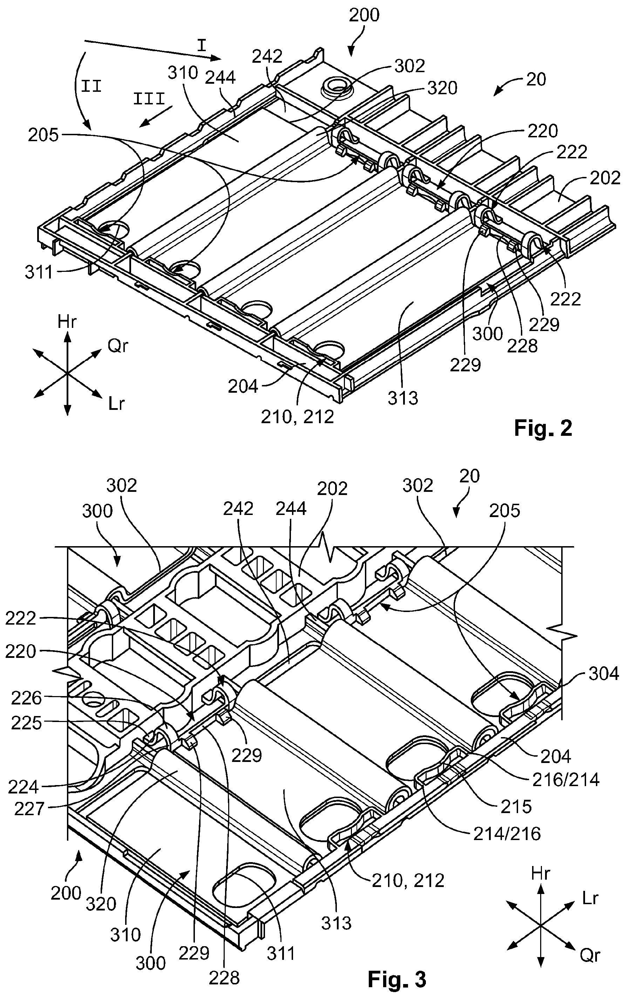

An attached longitudinal end section of a spring arm of the latching spring can be linked to the cell-connector support. In this case, the attached longitudinal end section is preferably formed to be integral with the cell-connector support. Preferably, the attached longitudinal end section is provided on the base bar, but of course it can also be provided on the support frame. A substantially rigid latching device can be provided on a free longitudinal end section of a/the spring arm. In this case, the latching device can also be formed on an elongation (prolongation, bar etc.) (cf. Figs. 2 and 3, connecting bar) of the free longitudinal end section (see below). To form the latching device cf. above (substantially rigid latching device).

A substantially spring-loadable spring region of the spring arm can be formed as an arc section of the latching spring. This spring region is consequently installed between the attached longitudinal end section and the free longitudinal end section of the spring arm. Preferably, in this case, the leaf spring is formed as a 90° to 270° latching spring (leaf spring), in particular a 180° latching spring, wherein the information in degrees specifies a total arc length (substantially a circular arc or an elliptical arc) of the spring region of the leaf spring.

In one embodiment, the spring-loadable latching mechanism can comprise a plurality of latching springs, exactly two latching springs being preferred. The latching springs can be mechanically interconnected at their free longitudinal end sections or the spring arms can be mechanically interconnected via a connecting bar. In this case, the free longitudinal end sections or the spring arms are preferably integrally connected to one another via the connecting bar. The connecting bar can have exactly one/the single substantially rigid latching device or a plurality of substantially rigid latching devices. To form the latching device, cf. once again above. In this case, exactly two latching devices are preferable.

The rigid latching device can be formed as a projection or shoulder extending in the transverse direction or longitudinal direction. The projection or the shoulder can be formed on the support frame or base bar. Furthermore, the projection can be formed as a bracket, in particular a single-layer bracket. Moreover, the two attached longitudinal end sections of the bracket can be linked to the cell-connector support. In this case, the attached longitudinal end sections are preferably formed to be integral with the cell-connector support; between these is situated a middle section of the bracket, which is preferably provided at a distance from the cell-connector support. Preferably, the attached longitudinal end sections are provided on the support frame, but of course they can also be provided on the base bar.

In one embodiment, the cell-connector sheet can comprise a plurality of mutually alternating electromechanical contacting mechanisms and mechanical bridging regions. In this case, the mutually alternating contacting mechanisms and bridging regions are preferably formed to be linear and aligned as a cell-connector sheet (therefore preferably substantially rectangular), this arrangement preferably extending in the longitudinal direction. The bridging regions can be formed as mechanical and thermal compensation mechanisms of the cell-connector sheet. In this case, the respective bridging region or the respective compensation mechanism serves to counter position tolerances of the cell poles and/or thermal distance changes of the cell-connector sheet and/or of the cell poles, and can be formed in a transverse cross-section, e.g. l-shaped, u-shaped, v-shaped, s-shaped, z-shaped etc.

The respective contacting mechanism can have a measuring recess, in particular a measuring through-recess (measuring eye), and/or a welding region, in particular a welding surface. Furthermore, the cell-connector sheet can have a current-tap mechanism of the cell-connector sheet on at least one of its marginal contacting mechanisms. Such a current-tap mechanism can be provided or formed, for example, as a preferably integral tab on the relevant contacting mechanism. A differently formed current-tap mechanism can of course be applied.

In one embodiment, the support frame can have at least one window or a plurality of windows, in which in each case at least one contacting mechanism can be accommodated. In one embodiment, a single contacting mechanism is accommodated in a single window, a plurality or multiplicity of windows and contacting mechanisms being applied per support frame. Furthermore, the support frame can comprise a plurality of mutually alternating windows and bars in the support frame. Moreover, a relevant bridging region or a relevant compensation mechanism can be received or is received on a respective bar.

In one embodiment, at least on account of a spring path of the spring-loadable latching mechanism, a mechanical play of the cell-connector sheet can exist in the transverse direction or longitudinal direction (compensation of position tolerances of the cell poles in the transverse direction). Furthermore, alternatively or additionally, a mechanical play between the rigid latching device and the cell-connector sheet, in the vertical direction, can be greater than or equal to a mechanical play between the spring-loadable latching mechanism and the cell-connector sheet (compensation of position tolerances of the cell poles in the vertical direction).

The cell-connector support can be formed as a cast part, in particular an injection-moulded part. That is to say, the cell-connector support is preferably manufactured from a plastic. Furthermore, the cell-connector support is preferably formed materially in one piece or in an integral manner. A sensor system and/or an electronics assembly can be integrated into the cell-connector support. Such a sensor system is formed, for example, as a voltage and/or temperature sensor system. Furthermore, such an electronics assembly can be formed, for example, as a monitoring electronics assembly. A cable channel can be integrated into the cell-connector support. Such a cable channel serves, for example, to lay a cable or a cable harness of the sensor system and/or of the electronics assembly. The cable channel is preferably situated in the base bar.

The cell-connector sheet can be formed as a stamped part, in particular a stamped bent part. The cell-connector sheet is preferably formed materially in one piece or in an integral manner. - Moreover, the cell-connector sheet furthermore can be installed or is installed in sections on/in the cell-connector support in a force-fitting manner by means of the snap-fit arrangement. As a result of this, the snap-fit arrangement furthermore becomes a clamping connection with preferably a small mechanical bias voltage onto the cell-connector sheet (preferably in the plane which, analogously to above, is spanned by a longitudinal direction and a transverse direction). A small mechanical bias voltage is intended to mean that, in this case, the cell-connector support does not deform substantially, on account of a mechanical counterforce from the cell-connector sheet which is stiff in comparison with the cell-connector support.

In the battery module according to the invention and in the battery according to the invention, storage-cell modules of the battery module or of the battery can be electrically connected or are electrically connected to one another by means of an electromechanical cell-contacting device arranged thereon, the electromechanical cell-contacting device being formed according to the invention. The cell-contacting device in this case can be arranged in two different states on the storage-cell modules.

First of all, (directly) after a mounting of the cell-contacting device on the storage-cell modules, the at least one cell-connector sheet lies on the relevant cell poles of the storage-cell modules, without being fixedly connected to them ('electrical connectability'). In this case, the cell-contacting device can be mechanically fixedly connected, for example, to the battery module or the battery. In the chronological sequence, for example after transportation of the battery module or the battery, the cell-connector sheet can be fixedly connected to the relevant cell poles of the storage-cell modules, in particular welded ('electrical connect-edness' also in the sense of mechanical fixing). - Moreover, the cell-contacting device can be covered above by means of a cover. This cover can simultaneously also be an outer cover of the battery module or of the battery.

The invention is explained in greater detail below using exemplary embodiments with reference to the attached schematic drawings, which are not true to scale. Sections, elements, components, units, diagrams and/or constituents which possess an identical, univocal or analogous form and/or function are identified by the same reference symbols in the description of the figures (see below), the list of reference symbols, the claims and in the figures (Fig.) of the drawings. A possible alternative, a steady-state and/or kinematic reversal, a combination, etc., which is not explained in the description of the invention (see above), is not illustrated in the drawings and/or is not exclusive, with respect to the exemplary embodiments of the invention or a constituent, a diagram, a unit, a component, an element or a section thereof can furthermore be derived from the list of reference symbols and/or from the description of the figures.

In the case of the invention, a feature (section, element, component, unit, constituent, function, size etc.) can be configured positively, i.e. present, or negatively, i.e. absent, a negative feature not being explained explicitly as a feature if, according to the invention, no importance is placed on the fact that it is absent, therefore the invention actually made, and not constructed by the prior art, consists in omitting that feature. A feature of this specification (description, list of reference symbols, claims, drawings) can be used not only in a specified manner, but rather can also be applied in another manner (isolation, summary, replacement, addition, uniqueness, omission etc.). In particular, it is possible using a reference symbol and a feature associated with this, or vice versa, in the description, the list of reference symbols, the claims and/or the drawings, to replace, add or omit a feature in the claims and/or the description. Moreover, as a result, a feature can be explained and/or specified in greater detail in a claim.

The features of this description (considering the (initially mostly unknown) prior art) can also be interpreted as optional features; i.e. every feature can be regarded as an optional, arbitrary or preferred feature, i.e. as a non-binding feature. It is thus possible to detach a feature, possibly including its periphery, from an exemplary embodiment, this feature then being transferable to a generalised inventive concept. The lack of a feature (negative feature) in an exemplary embodiment shows that the feature is optional in relation to the invention. Furthermore, in the case of a type term for a feature, a generic term can also be inferred for the feature (where appropriate further hierarchical division into subgenus etc.), as a result of which, for example taking equivalent effect and/or equivalence into account, a generalisation of the feature is possible.

In the merely exemplary figures:
Fig. 1 shows, in a three-dimensional exploded view, a battery module for a battery and a cell-connector support and five cell-connector sheets of a first embodiment of a cell-contacting device according to the invention for this battery module;
Fig. 2 shows, in an oblique perspective view from above, a second embodiment of the cell-contacting device according to the invention for a battery module of a battery in a mounted state, wherein an installation of a cell-connector sheet on/in the cell-connector support is illustrated;
Fig. 3 likewise shows, in an oblique perspective view from above, a two-sided, broken-away, enlarged cutout of a mounted cell-contacting device according to Fig. 1; and
Figs. 4 and 5 show, in perspective views analogous to Fig. 1, the cell-contacting device according to the invention in a respectively mounted state over the battery module (Fig. 4) and in an intended position on the battery module (Fig. 5).

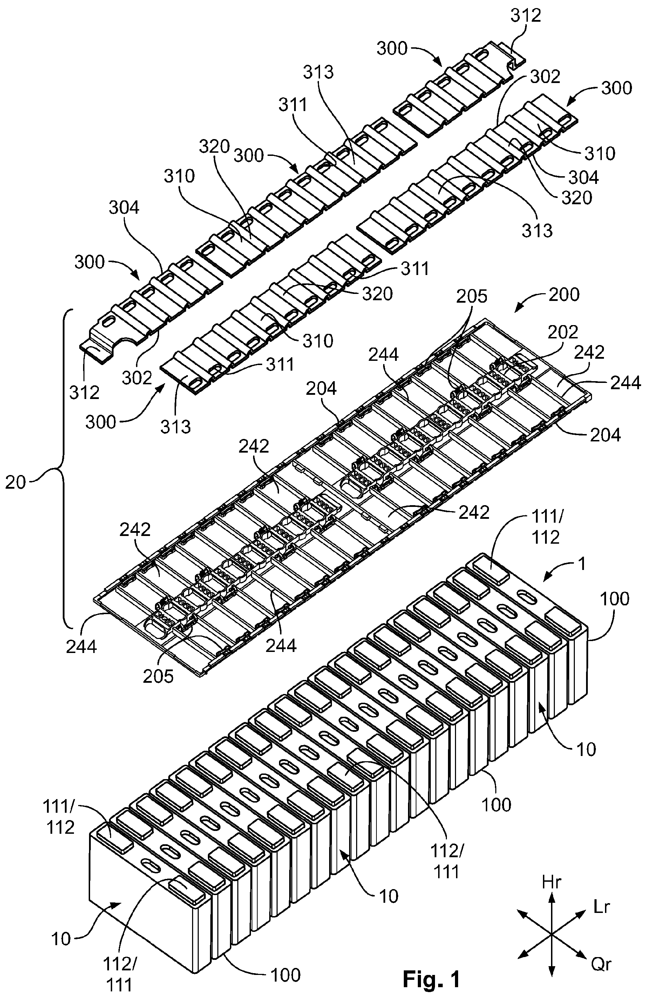

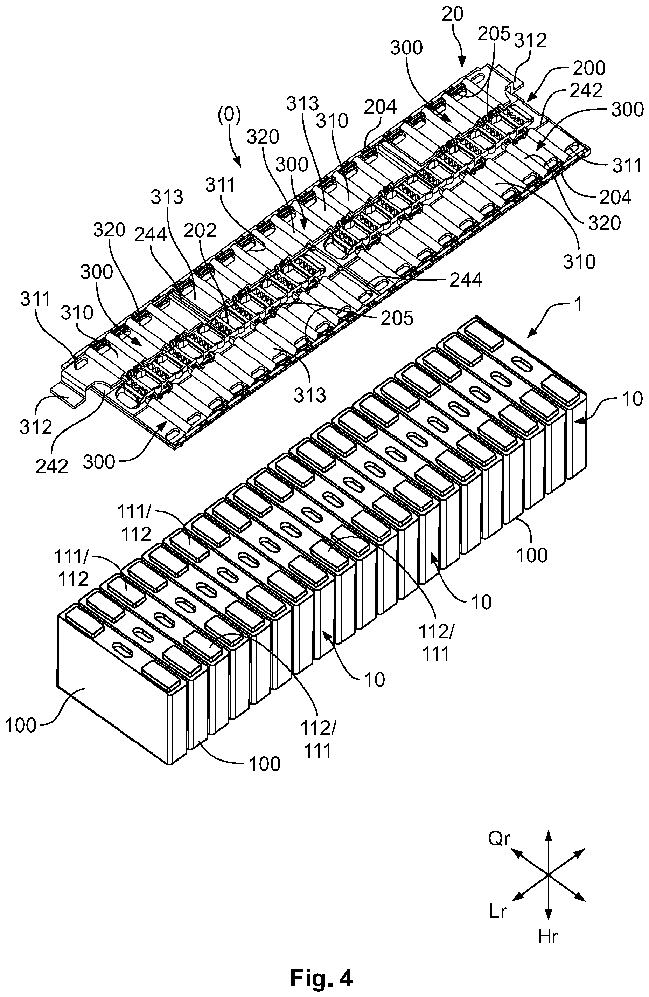

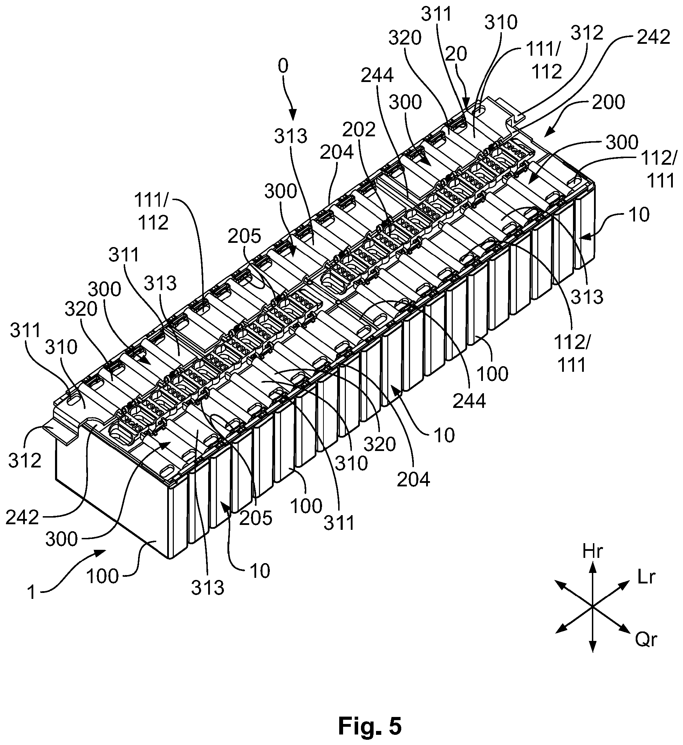

The invention is explained in greater detail below using exemplary embodiments of an embodiment (Figs. 1 to 5) of a variant of an electromechanical cell-contacting device 20, often also referred to as a cell-contacting system 20, for an electrochemical battery module 1 or an electrochemical accumulator module 1 of an electrochemical battery 0 or an electrochemical accumulator 0 of a motor vehicle. In particular, the invention can be applied to a traction-battery module 1 of a traction battery 0 of a hybrid or electric motor vehicle.

Although the invention is described and illustrated more closely and in greater detail by way of preferred exemplary embodiments, in this way the invention is not limited by the disclosed exemplary embodiments, rather it is of a fundamental nature. Other variations can be derived from these and/or from the above (description of the invention) without departing from the scope of protection of the invention. Thus, the invention can also generally be applied to battery modules or batteries and/or in a non-vehicle industry, such as an electrical engineering industry or power engineering industry etc., and very generally in engineering.

In the drawings, only those spatial sections of a subject-matter of the invention which are necessary for an understanding of the invention are depicted. The explanation of the invention below (coordinate system) concerns a longitudinal direction Lr and/or longitudinal axis Lr (length), a transverse direction Qr and/or transverse axis Qr (width), and a vertical direction Hr and/or vertical axis Hr (height) of the battery module 1 or of the cell-contacting device 20. The entity battery module 1 is understood to mean the entities battery package, battery pack, battery etc. (cf. above).

Figs. 1 and 3 to 5 show, by way of example, an application of the first embodiment of the invention, wherein a multiplicity of (here 20) electrochemical storage-cell modules 10 are electrically and mechanically combined to form a battery module 1. In this case, the number of storage-cell modules 10 is at least two or three. A further mechanical holding together of the storage-cell modules 10 can additionally take place by way of a housing, a cage, a tray and/or a cover etc. (not depicted).

A single storage-cell module 10 preferably has a mainly or substantially prismatic, in particular a mainly or substantially cuboid, cell housing 100. The cell housing 100 preferably has (at least or exactly) one cell pole 111/112 formed as an anode and preferably (at least or exactly) one cell pole 112/111 formed as a cathode. In this case, the relevant cell pole 111, 112 is provided on the outside of the cell housing 100, and in this case, for example, can pass through the cell housing 100 or a cover of the cell housing 100.

The cell poles 111, 112 or only some of them (not depicted) can be electrically and mechanically interconnected to the battery module 1 by means of the cell-contacting device 20. In this case, all the (non-depicted) or (in each case) a portion (here five portions) of the cell poles 111, 112 can in turn be electrically connected to one another. - The cell-contacting device 20 extending in a planar manner preferably mainly or substantially in the transverse direction Qr and longitudinal direction Lr comprises, for this purpose, at least one mechanical cell-connector support 200 and at least one electromechanical cell-connector sheet 300. In this case, a single cell-connector support 200 has at least one cell-connector sheet 300 (cf. Fig. 2), preferably a plurality of cell-connector sheets 300, assigned to it.

The lattice-shaped cell-connector support 200 extending preferably mainly or substantially in the transverse direction Qr and longitudinal direction Lr, in this case, comprises at least one support frame 204 which is preferably provided on a base bar 202, wherein the base bar 202, in particular an internal border of the base bar 202, as depicted, can form a section of the support frame 204. The relevant support frame 204 preferably comprises a plurality of windows 242, which are preferably constituted of a plurality of bars 244, which bridge the support frame 204 completely on the inside. Furthermore, the cell-connector support 200 or the cell-contacting device 20 can have a sensor system, an electronics assembly, a cable channel etc. (not depicted).

A relevant cell-connector sheet 300 extending in a planar manner preferably in the transverse direction Qr and longitudinal direction Lr preferably comprises, in a mutually alternating manner, a plurality of (at least two or three) electromechanical contacting mechanisms 310 for at least one cell pole 111/112 and at least one, but in particular a plurality of (at least two) mechanical bridging regions 320. In this case, the cell-connector sheet 300 is formed preferably mainly or substantially in a rectangular manner. Other shapes can of course be applied.

A single contacting mechanism 310, here these are laid out for a single cell pole 111/112 in each case (cf. drawings), can also be laid out for two or more cell poles 111, 111, ... / 112, 112, ..., without being mechanically interrupted by a bridging region 310. The application of different such contacting mechanisms 310 per cell-connector sheet 300 is of course possible. - Preferably a single contacting mechanism 310 has, depending on the number of cell poles 111, 111, ... / 112, 112, ... to be adjoined, preferably in each case a measuring recess 311 (measuring eye 311), in particular a measuring through-recess 311, and/or preferably in each case a welding region 313, in particular a welding surface 313. Here, a relevant single contacting mechanism 310 in each case has a single such measuring recess 311 and a single such welding region 313. The welding region 313 can possess a particular configuration at/on the contacting mechanism 310 (not depicted).

Moreover, in particular for the anodes of the battery module 1, a relevant cell-connector sheet 300 can have a current-tap mechanism 312 at a contacting mechanism 310 (cf. Figs. 1, 4 and 5) or at a bridging region 320 (not depicted). In this case, the current-tap mechanism 312 can be formed in a tab-shaped manner, for example; other forms (screw connection, clamp etc.) can of course be applied. The current-tap mechanism 312, in this case, can stick out from the cell-connector sheet 300 in the longitudinal direction Lr, transverse direction Qr and/or vertical direction Hr. Preferably, a relevant current-tap mechanism 312 sticks out laterally from the cell-connector sheet 300 or cell-connector support 200.

A bridging region 320 can serve as a mechanical and/or thermal compensation mechanism 320 of the cell-connector sheet 300 for position tolerances of the cell poles 111/112 and/or for thermal distance changes of the cell-connector sheet 300 and/or of the cell poles 111/112 (exemplary cross-sections see above). In this case, at least one such, a plurality of or all the bridging regions 320 of the cell-connector sheet 300 can be formed in this way. - In a mounted state of a cell-connector sheet 300 on/in the cell-connector support 200, the contacting mechanisms 310 are arranged in the windows 242 and the bridging regions 320 are arranged on the bars 244.

According to the invention, a single cell-connector sheet 300 can be fixed (Fig. 1) or is fixed (Figs. 2 to 5) to/in the cell-connector support 200 by means of at least one snap-fit arrangement 205 of the cell-connector support 200. In this case, the cell-connector sheet 300 can be fixed or is fixed at least in sections to/in the cell-connector support 200 in a substantially form-fitting manner (cf. above). - Furthermore, the at least one snap-fit arrangement 205 can be formed in such a way that the cell-connector sheet 300 can be fixed or is fixed in sections to/in the cell-connector support 200 in a force-fitting manner.

The at least sectional form-fitting connection of the relevant cell-connector sheet 300 to/in the cell-connector support 200, in this case, is installed in a plane which is spanned by a longitudinal direction Lr and a transverse direction Qr. In both vertical directions Hr, for this purpose, the relevant cell-connector sheet 300 is retained by a latching device 210 and by a latching device 229 of a snap-fit arrangement 205 (cf. below) and the bars 244. The bars 244 and optionally bars 244 at longitudinal ends of the cell-connector support 200 secure a relevant cell-connector sheet 300 against a lateral sliding out from the cell-connector support 200.

The relevant snap-fit arrangement 205 is installed on/in the cell-connector support 200, in the support frame 204, or in particular in the support frame 204 between an outer border of the support frame 204 and the base bar 202. A single snap-fit arrangement 205 preferably has at least one substantially spring-loadable latching mechanism 220 and at least one substantially rigid latching device 210. To form the spring-loadable latching mechanism 220 and/or the rigid latching device 210 cf. also above. - It is also possible to constitute a snap-fit arrangement 205 from two substantially spring-loadable latching mechanisms 220 (cf. below) or from two substantially rigid latching devices 210 (cf. below).

The cell-contacting device 20 or the cell-connector support 200 and the respective cell-connector sheet 300 or the support frame 204 and also the base bar 202 and the respective cell-connector sheet 300 or the at least one snap-fit arrangement 205 are/is formed in such a way that the mounting movement/s (cf. Fig. 2: I, II & III) of the cell-connector sheet 300 onto the cell-connector support 200 is/are able to be carried out by means of the cell-connector sheet 300. In this case, the cell-connector sheet 300 can be mounted on/in the cell-connector support 200, with the result that the cell-connector sheet 300 can be installed in sections on/in the cell-connector support 200 in a substantially form-fitting manner.

The substantially spring-loadable latching mechanism 220 here (cf. Fig. 3) comprises preferably two latching springs 222 formed as leaf springs 222, which preferably are mechanically interconnected to their two spring arms 224 by means of a connecting bar 228. The connecting bar 228 has at least one substantially rigid latching device 229 (cf. above). Two latching devices 229 are preferred. In this case, the latching mechanism 220 protrudes into the relevant window 242 or away beyond it and is formed in a plane at the window 242, spanned by a longitudinal direction Lr and a transverse direction Qr in a to-and-fro spring-loadable manner. Furthermore, a respective leaf spring 222 of the latching mechanism 220 is preferably formed as a 90° to 270° leaf spring 222, in particular a 180° leaf spring 222 (cf. above).

A single latching spring 222 or leaf spring 222 comprises preferably a spring arm 224, the attached longitudinal end section 225 of which is provided or formed on the cell-connector support 200 or base bar 202 (support frame 204 also possible). The substantially spring-loadable spring region 226 of the spring arm 224 adjoins this attached longitudinal end section 225, the spring region 226 opening into a free longitudinal end section 227 of the spring arm 224, which is mechanically connected to a free longitudinal end section 227, directly adjacent thereto, of the other latching spring 222 via the connecting bar 228. - Here, all the mechanical connections of the latching mechanism 220 are integral mechanical connections in this case.

The substantially rigid latching device 210 is formed here as a projection 212 (cf. Fig. 3), which is provided or formed on the cell-connector support 200 or support frame 204 (base bar 202 also possible). The projection 212 here is furthermore formed as a bracket 212, the attached (first) longitudinal end section 214 of which and the attached (second) longitudinal end section 216 of which are provided or formed on the cell-connector support 200 or support frame 204 (also base bar 202). Situated therebetween is a middle section 215 of the bracket 212, which protrudes beyond the relevant window 242 in the longitudinal direction Lr and transverse direction Qr in a substantially rigidly formed manner. - Here, all the mechanical connections of the latching device 210 are integral mechanical connections in this case.

The electromechanical cell-contacting device 20 of the first embodiment (cf. Figs. 1, 3 to 5) comprises a single mechanical cell-connector support 200 and five electromechanical cell-connector sheets 300, of which three are provided for the anodes and two are provided for the cathodes of the battery module 1. In this case, the cell-connector sheets 300, which lie on the outside in the longitudinal direction Lr, possess in each case a current-tap mechanism 312 laterally standing out, preferably in the longitudinal direction Lr. The electromechanical cell-contacting device 20 of the second embodiment (cf. Fig. 2) comprises a single mechanical cell-connector support 200 and a single cell-connector sheet 300, for the anodes or for the cathodes of the battery module 1. In this case, the cell-contacting device 20 of the second embodiment can also be regarded as a part of a different embodiment of the invention.

A mounting or an installation of a relevant cell-connector sheet 300 on/in the cell-connector support 200 in the depicted embodiments (drawings) is explained in greater detail below, with reference to Figs. 2 and 3. - In a first step I, a first mounting movement I of the cell-connector sheet 300 onto the cell-connector support 200 takes place, the whole unattached or free (apart from a retention) cell-connector sheet 300 being moved with its inner outer border 302, in particular its inner outer longitudinal border 302, preferably in a linear and sharply forward manner towards the spring-loadable latching mechanism/s 220 of the snap-fit arrangement/s 205. In this case, the cell-connector sheet 300 is moved so far towards the spring-loadable latching mechanism/s 220 that the outer border 302 sits on this/these and compresses these.

In a second step II chronologically following the first step **I,** a second mounting movement II of the cell-connector sheet 300 towards the cell-connector support 200 takes place, the cell-connector sheet 300 attached on one side (inner outer border 302), in particular lengthwise (inner outer longitudinal border 302), being pivoted towards the cell-connector support 200 and into this. In this case, the contacting mechanisms 310 are placed into the windows 242 and the bridging regions 320 are placed onto the bars 244. In this case, the rigid latching mechanism/s 210 of the snap-fit arrangement 205 is/are not yet 'active' or does not/do not yet fulfil their latching function with the cell-connector sheet 300.

In a third step III chronologically following the second step II, a third mounting movement III of the cell-connector sheet 300 towards the cell-connector support 200 takes place, the cell-connector sheet 300 arranged in a plane of the cell-connector support 200 being displaced in a substantially linear manner (transverse direction Qr) inside the cell-connector support 200. This can take place only on account of the rebounding spring-loadable latching mechanism/s 220. In this case, the cell-connector sheet 300 reaches its mounted position or its installed position on/in the cell-connector support 200. The rigid latching mechanism/s 210 of the snap-fit arrangement 205 is/are active or fulfills/fulfil their latching function/s with the cell-connector sheet 300. - Each spring-loadable latching mechanism 220 can have a single rigid latching device 210 (not depicted) or a plurality of rigid latching devices 210 assigned to it (optionally all embodiments).

The at least sectionally substantially form-fitting connection between the cell-connector support 200 and the relevant cell-connector sheet 300 is established. - It is of course possible to combine these mounting movements I, II, III to make a single or two mounting movements. - Furthermore, it is of course possible, depending on a form of the cell-contacting device 20, to apply at least one different linear movement (in a longitudinal direction Lr, in a transverse direction Qr and/or in a vertical direction Hr) and/or at least one different rotational movement (also: pivoting) (about a longitudinal axis Lr, about a transverse axis Qr and/or about a vertical axis Hr).

## Claims

1. Electromechanical cell-contacting device (20) for a battery module (1) of a battery (0) of a motor vehicle, in particular for a traction-battery module (1) of a traction battery (0) of a hybrid or electric motor vehicle, wherein
the cell-contacting device (20) comprises a mechanical cell-connector support (200) which can be fitted onto storage-cell modules (10) of the battery module (1), and a plurality of electromechanical cell-connector sheets (300), **characterised in that**
the cell-contacting device (20) is formed in such a way that the plurality of cell-connector sheets (300) can be installed or are installed on/in the cell-connector support (200), wherein a relevant cell-connector sheet (300) can be mounted or is mounted on/in the cell-connector support (200) by means of at least one snap-fit arrangement (205) of the cell-connector support (200), with the result that the cell-connector sheet (300) can be installed or is installed in sections on/in the cell-connector support (200) in a substantially form-fitting manner.

2. Electromechanical cell-contacting device (20) according to the preceding claim, **characterised in that**:
• the cell-connector sheet (300), on two of its mutually opposed sides, can be installed or is installed in each case in sections on/in the cell-connector support (200) in a substantially form-fitting manner,
• the cell-connector sheet (300), additionally on its third side and optionally additionally on its fourth side, can be installed or is installed in each case in sections on/in the cell-connector support (200) in a substantially form-fitting manner, and/or
• the snap-fit arrangement (205) is formed in such a way, and/or a form-fitting connection between the cell-connector sheet (300) and the cell-connector support (200) permits, that position tolerances from electromechanical cell poles (111, 112) of the storage-cell modules (10) can be compensated.

3. Electromechanical cell-contacting device (20) according to one of the preceding claims, **characterised in that**:
• the cell-connector support (200) extends in a planar manner substantially in a longitudinal direction (Lr) and a transverse direction (Qr) of the cell-contacting device (20),
• the cell-connector sheet (300) can be installed or is installed on/in the cell-contacting device (20) substantially by a linear movement in a longitudinal direction (Lr), a transverse direction (Qr) and/or a vertical direction (Hr) of the cell-contacting device (20), and/or
• the cell-connector sheet (300) can be installed or is installed on/in the cell-contacting device (20) substantially by a rotational movement about a longitudinal axis (Lr), a transverse axis (Qr) and/or a vertical axis (Hr) of the cell-contacting device (20).

4. Electromechanical cell-contacting device (20) according to one of the preceding claims, **characterised in that** the cell-connector support (200) and the cell-connector sheet (300) are formed in relation to one another in such a way that, when mounting the cell-connector sheet (300) on/in the cell-connector support (200),
the cell-connector sheet (300) firstly can be placed (I) with an outer border (302), in particular an outer longitudinal border (302), at/onto the cell-connector support (200), and subsequently can be pivoted (II) onto the cell-connector support (200) towards and into this, and further subsequently (III) can be displaced in the plane of the cell-connector support (200).

5. Electromechanical cell-contacting device (20) according to one of the preceding claims, **characterised in that** the snap-fit arrangement (205) comprises at least one substantially spring-loadable latching mechanism (220) and at least one substantially rigid latching device (210), wherein
the cell-connector sheet (300) can be installed or is installed between the spring-loadable latching mechanism (220) and the rigid latching device (210), wherein the latching mechanism (220) and the latching device (210) are formed to interact in such a way that the cell-connector sheet (300) is secured against falling out of the cell-connector support (200).

6. Electromechanical cell-contacting device (20) according to one of the preceding claims, **characterised in that**:
• the cell-connector support (200) comprises at least one support frame (204), on/in which the at least one cell-connector sheet (300) can be mounted or is mounted by means of the at least one snap-fit arrangement (205),
• the support frame (204) is provided on a base bar (202) of the cell-connector support (200), wherein the base bar (202) can be provided or is provided preferably between the respective two cell poles (111, 112) of the storage-cell modules (10), and/or
• the support frame (204) is formed at least partially or completely in a circumferential manner, with the base bar (202) as one side.

7. Electromechanical cell-contacting device (20) according to one of the preceding claims, **characterised in that**:
• the spring-loadable latching mechanism (220) has a latching spring (222) which is spring-loadable in the transverse direction (Qr) or longitudinal direction (Lr),
• the/a latching spring (222) is installed to be spring-loadable substantially parallel to the transverse direction (Qr) or longitudinal direction (Lr),
• the/a latching spring (222) is formed on the base bar (202) or support frame (204), and/or
• the/a latching spring (222) is formed as a leaf spring (222), in particular a single-layer leaf spring (222).

8. Electromechanical cell-contacting device (20) according to one of the preceding claims, **characterised in that**:
• an attached longitudinal end section (225) of a spring arm (224) of the latching spring (222) is linked to the cell-connector support (200),
• a substantially rigid latching device (229) is provided on a free longitudinal end section (227) of a/the spring arm (224), and/or
• a substantially spring-loadable spring region (226) of the spring arm (224) is formed as an arc section (226) of the latching spring (222).

9. Electromechanical cell-contacting device (20) according to one of the preceding claims, **characterised in that**:
• the spring-loadable latching mechanism (220) comprises a plurality of latching springs (222),
• the latching springs (222) are mechanically interconnected at their free longitudinal end sections (227) or the spring arms (224) are mechanically interconnected via a connecting bar (228), and/or
• the connecting bar (228) has a/the single substantially rigid latching device (229) or a plurality of substantially rigid latching devices (229).

10. Electromechanical cell-contacting device (20) according to one of the preceding claims, **characterised in that**:
• the rigid latching device (210) is formed as a projection (212) or shoulder extending in the transverse direction (Qr) or longitudinal direction (Lr),
• the projection (212) or the shoulder is formed on the support frame (204) or base bar (202),
• the projection (212) is formed as a bracket (212), in particular a single-layer bracket (212), and/or
• the two attached longitudinal end sections (214, 216) of the bracket (212) are linked to the cell-connector support (200).

11. Electromechanical cell-contacting device (20) according to one of the preceding claims, **characterised in that**:
• the cell-connector sheet (300) comprises a plurality of mutually alternating electromechanical contacting mechanisms (310) and mechanical bridging regions (320),
• the bridging regions (320) are formed as mechanical and thermal compensation mechanisms (320) of the cell-connector sheet (300),
• the respective contacting mechanism (310) has a measuring recess (311) and/or a welding region (313), and/or
• the cell-connector sheet (300) has a current-tap mechanism (312) of the cell-connector sheet (300) on at least one of its marginal contacting mechanisms (310).

12. Electromechanical cell-contacting device (20) according to one of the preceding claims, **characterised in that**:
• the support frame (204) has at least one window (242) or a plurality of windows (242), in which in each case at least one contacting mechanism (310) can be accommodated,
• the support frame (204) comprises a plurality of mutually alternating windows (242) and bars (244) in the support frame (204), and/or
• a relevant bridging region (320) or a relevant compensation mechanism (320) can be received or is received on a respective bar (244).

13. Electromechanical cell-contacting device (20) according to one of the preceding claims, **characterised in that**, at least on account of a spring path of the spring-loadable latching mechanism (220), a mechanical play of the cell-connector sheet (300) exists in the transverse direction (Qr) or longitudinal direction (Lr), and/or
a mechanical play between the rigid latching device (210) and the cell-connector sheet (300), in the vertical direction (Hr), is greater than or equal to a mechanical play between the spring-loadable latching mechanism (220) and the cell-connector sheet (300).

14. Electromechanical cell-contacting device (20) according to one of the preceding claims, **characterised in that**:
• the cell-connector support (200) is formed as a cast part, in particular an injection-moulded part,
• a sensor system and/or an electronics assembly is integrated into the cell-connector support (200),
• a cable channel is integrated into the cell-connector support (200),
• the cell-connector sheet (300) is formed as a stamped part, in particular a stamped bent part, and/or
• the cell-connector sheet (300) furthermore can be installed or is installed in sections on/in the cell-connector support (200) in a force-fitting manner by means of the snap-fit arrangement (205).

15. Battery module (1) or battery (0) for a motor vehicle, in particular a traction-battery module (1) or traction battery (0) for a hybrid vehicle or an electric motor vehicle, wherein
storage-cell modules (10) of the battery module (1) or of the battery (0) can be electrically connected or are electrically connected to one another by means of an electromechanical cell-contacting device (20) arranged thereon, **characterised in that**
the electromechanical cell-contacting device (20) is formed according to one of the preceding claims.

## Patentansprüche

1. Elektromechanische Zellkontaktierungsvorrichtung (20) für ein Batteriemodul (1) einer Batterie (0) eines Kraftfahrzeugs, insbesondere für ein Traktionsbatteriemodul (1) einer Traktionsbatterie (0) eines Hybrid- oder Elektrokraftfahrzeugs, wobei
die Zellkontaktierungsvorrichtung (20) einen auf Speicherzellmodule (10) des Batteriemoduls (1) aufsetzbaren mechanischen Zellverbinderträger (200) und mehrere elektromechanische Zellverbinderbleche (300) umfasst, **dadurch gekennzeichnet, dass**
die Zellkontaktierungsvorrichtung (20) derart ausgebildet ist, dass die mehreren Zellverbinderbleche (300) auf/in den Zellverbinderträger (200) einrichtbar oder eingerichtet sind, wobei mittels mindestens einer Einschnappanordnung (205) des Zellverbinderträgers (200) ein entsprechendes Zellverbinderblech (300) auf/in den Zellverbinderträger (200) montierbar bzw. montiert ist, sodass das Zellverbinderblech (300) abschnittsweise im Wesentlichen formschlüssig am/im Zellverbinderträger (200) einrichtbar oder eingerichtet ist.

2. Elektromechanische Zellenkontaktierungsvorrichtung (20) gemäß vorhergehendem Anspruch, **dadurch gekennzeichnet, dass**:
• das Zellverbinderblech (300) an zwei seiner einander gegenüberliegenden Seiten jeweils abschnittsweise im Wesentlichen formschlüssig am/im Zellverbinderträger (200) einrichtbar oder eingerichtet ist,
• das Zellverbinderblech (300) zusätzlich an seiner dritten und ggf. zusätzlich an seiner vierten Seite jeweils abschnittsweise im Wesentlichen formschlüssig am/im Zellverbinderträger (200) einrichtbar oder eingerichtet ist, und/oder
• die Einschnappanordnung (205) derart ausgebildet ist und/oder es einen Formschluss zwischen dem Zellverbinderblech (300) und dem Zellverbinderträger (200) erlaubt, dass Positionstoleranzen von elektromechanischen Zellpolen (111, 112) der Speicherzellmodule (10) kompensierbar sind.

3. Elektromechanische Zellkontaktierungsvorrichtung (20) gemäß einem der vorhergehenden Ansprüche, **dadurch gekennzeichnet, dass**:
• sich der Zellverbinderträger (200) im Wesentlichen in eine Längsrichtung (Lr) und eine Querrichtung (Qr) der Zellkontaktierungsvorrichtung (20) flächig erstreckt,
• das Zellverbinderblech (300) im Wesentlichen durch eine Linearbewegung in eine Längsrichtung (Lr), eine Querrichtung (Qr) und/oder eine Hochrichtung (Hr) der Zellkontaktierungsvorrichtung (20) an/in der Zellkontaktierungsvorrichtung (20) einrichtbar oder eingerichtet ist, und/oder
• das Zellverbinderblech (300) im Wesentlichen durch eine Rotationsbewegung um eine Längsachse (Lr), eine Querachse (Qr) und/oder eine Hochachse (Hr) der Zellkontaktierungsvorrichtung (20) an/in der Zellkontaktierungsvorrichtung (20) einrichtbar oder eingerichtet ist.

4. Elektromechanische Zellkontaktierungsvorrichtung (20) gemäß einem der vorhergehenden Ansprüche, **dadurch gekennzeichnet, dass** der Zellverbinderträger (200) und das Zellverbinderblech (300) gegenseitig derart ausgebildet sind, dass bei einer Montage des Zellverbinderblechs (300) am/im Zellverbinderträger (200)
das Zellverbinderblech (300) zunächst mit einem Außenrand (302), insbesondere einem Außenlängsrand (302), an/auf den Zellverbinderträger (200) setzbar (I) ist und in der Folge auf den Zellverbinderträger (200) zu- und in diesen hineinschwenkbar ist (II) und in der weiteren Folge (III) in der Ebene des Zellverbinderträgers (200) verlagerbar ist.

5. Elektromechanische Zellkontaktierungsvorrichtung (20) gemäß einem der vorhergehenden Ansprüche, **dadurch gekennzeichnet, dass** die Einschnappanordnung (205) wenigstens eine im Wesentlichen federbare Rasteinrichtung (220) und wenigstens eine im Wesentlichen starre Rastvorrichtung (210) umfasst, wobei
das Zellverbinderblech (300) zwischen der federbaren Rasteinrichtung (220) und der starren Rastvorrichtung (210) einrichtbar oder eingerichtet ist, wobei die Rasteinrichtung (220) und die Rastvorrichtung (210) derart zusammenwirkend ausgebildet sind, dass das Zellverbinderblech (300) gegen ein Herausfallen aus dem Zellverbinderträger (200) gesichert ist.

6. Elektromechanische Zellkontaktierungsvorrichtung (20) gemäß einem der vorhergehenden Ansprüche, **dadurch gekennzeichnet, dass**:
• der Zellverbinderträger (200) wenigstens einen Trägerrahmen (204) umfasst, an/in welchem das wenigstens eine Zellverbinderblech (300) mittels der wenigstens einen Einschnappanordnung (205) montierbar oder montiert ist,
• der Trägerrahmen (204) an einem Basissteg (202) des Zellverbinderträgers (200) vorgesehen ist, wobei der Basissteg (202) bevorzugt zwischen den jeweiligen zwei Zellpolen (111, 112) der Speicherzellmodule (10) vorsehbar oder vorgesehen ist, und/oder
• der Trägerrahmen (204) wenigstens teilweise oder vollständig, mit dem Basissteg (202) als einer Seite, umlaufend ausgebildet ist.

7. Elektromechanische Zellkontaktierungsvorrichtung (20) gemäß einem der vorhergehenden Ansprüche, **dadurch gekennzeichnet, dass**:
• die federbare Rasteinrichtung (220) eine in Querrichtung (Qr) oder Längsrichtung (Lr) federbare Rastfeder (222) aufweist,
• die/eine Rastfeder (222) im Wesentlichen parallel zur Querrichtung (Qr) oder Längsrichtung (Lr) federbar eigerichtet ist,
• die/eine Rastfeder (222) am Basissteg (202) oder Trägerrahmen (204) ausgebildet ist und/oder
• die/eine Rastfeder (222) als eine Blattfeder (222), insbesondere eine einlagige Blattfeder (222), ausgebildet ist.

8. Elektromechanische Zellkontaktierungsvorrichtung (20) gemäß einem der vorhergehenden Ansprüche, **dadurch gekennzeichnet, dass**:
• ein gebundener Längsendabschnitt (225) eines Federarms (224) der Rastfeder (222) am Zellverbinderträger (200) angebunden ist,
• an einem freien Längsendabschnitt (227) eines/des Federarms (224) eine im Wesentlichen starre Rastvorrichtung (229) vorgesehen ist und/oder
• ein im Wesentlichen federbarer Federbereich (226) des Federarms (224) als ein Bogenabschnitt (226) der Rastfeder (222) ausgebildet ist.

9. Elektromechanische Zellkontaktierungsvorrichtung (20) gemäß einem der vorhergehenden Ansprüche, **dadurch gekennzeichnet, dass**:
• die federbare Rasteinrichtung (220) eine Mehrzahl von Rastfedern (222) umfasst,
• die Rastfedern (222) an ihren freien Längsendabschnitten (227) oder die Federarme (224) über einen Verbindungssteg (228) mechanisch zusammengeschaltet sind, und/oder
• der Verbindungssteg (228) eine/die einzige im Wesentlichen starre Rastvorrichtung (229) oder eine Mehrzahl von im Wesentlichen starren Rastvorrichtungen (229) aufweist.

10. Elektromechanische Zellkontaktierungsvorrichtung (20) gemäß einem der vorhergehenden Ansprüche, **dadurch gekennzeichnet, dass**:
• die starre Rastvorrichtung (210) als ein/e sich in Querrichtung (Qr) oder Längsrichtung (Lr) erstreckende/r Vorsprung (212) oder Schulter ausgebildet ist,
• der Vorsprung (212) oder die Schulter am Trägerrahmen (204) oder Basissteg (202) ausgebildet ist,
• der Vorsprung (212) als ein Bügel (212), insbesondere ein einlagiger Bügel (212), ausgebildet ist und/oder
• die zwei gebundenen Längsendabschnitte (214, 216) des Bügels (212) am Zellverbinderträger (200) angebunden sind.

11. Elektromechanische Zellkontaktierungsvorrichtung (20) gemäß einem der vorhergehenden Ansprüche, **dadurch gekennzeichnet, dass**:
• das Zellverbinderblech (300) eine Mehrzahl von einander abwechselnden elektromechanischen Kontaktiereinrichtungen (310) und mechanischen Überbrückungsbereichen (320) umfasst,
• die Überbrückungsbereiche (320) als mechanische und thermische Kompensationseinrichtungen (320) des Zellverbinderblechs (300) ausgebildet sind,
• die jeweilige Kontaktiereinrichtung (310) eine Messausnehmung (311) und/oder einen Schweißbereich (313) aufweist und/oder
• das Zellverbinderblech (300) an wenigstens einer seiner randständigen Kontaktiereinrichtungen (310) eine Stromabgriffseinrichtung (312) des Zellverbinderblechs (300) aufweist.

12. Elektromechanische Zellkontaktierungsvorrichtung (20) gemäß einem der vorhergehenden Ansprüche, **dadurch gekennzeichnet, dass**:
• der Trägerrahmen (204) wenigstens ein Fenster (242) oder eine Mehrzahl von Fenstern (242) aufweist, in welchem bzw. in welchen jeweils wenigstens eine Kontaktiereinrichtung (310) Platz finden kann,
• der Trägerrahmen (204) eine Mehrzahl von einander abwechselnden Fenstern (242) und Stegen (244) im Trägerrahmen (204) umfasst und/oder
• auf einem jeweiligen Steg (244) ein betreffender Überbrückungsbereich (320) oder eine betreffende Kompensationseinrichtung (320) aufnehmbar oder aufgenommen ist.

13. Elektromechanische Zellkontaktierungsvorrichtung (20) gemäß einem der vorhergehenden Ansprüche, **dadurch gekennzeichnet, dass** wenigstens aufgrund eines Federwegs der federbaren Rasteinrichtung (220) ein mechanisches Spiel des Zellverbinderblechs (300) in Querrichtung (Qr) oder Längsrichtung (Lr) gegeben ist, und/oder
ein mechanisches Spiel zwischen der starren Rastvorrichtung (210) und dem Zellverbinderblech (300) in Hochrichtung (Hr) größer oder gleich einem mechanischen Spiel zwischen der federbaren Rasteinrichtung (220) und dem Zellverbinderblech (300) ist.

14. Elektromechanische Zellkontaktierungsvorrichtung (20) gemäß einem der vorhergehenden Ansprüche, **dadurch gekennzeichnet, dass**:
• der Zellverbinderträger (200) als ein Gussteil, insbesondere ein Spritzgussteil, ausgebildet ist,
• in den Zellverbinderträger (200) eine Sensorik und/oder Elektronik integriert ist,
• in den Zellverbinderträger (200) ein Kabelkanal integriert ist,
• das Zellverbinderblech (300) als ein Stanzteil, insbesondere ein Stanzbiegeteil, ausgebildet ist und/oder
• mittels der Einschnappanordnung (205) das Zellverbinderblech (300) ferner abschnittsweise kraftschlüssig am/im Zellverbinderträger (200) einrichtbar oder eingerichtet ist.

15. Batteriemodul (1) oder Batterie (0) für ein Kraftfahrzeug, insbesondere Traktionsbatteriemodul (1) oder Traktionsbatterie (0) für ein Hybridfahrzeug oder ein Elektrokraftfahrzeug, wobei
Speicherzellmodule (10) des Batteriemoduls (1) oder der Batterie (0) mittels einer darauf angeordneten elektromechanischen Zellkontaktierungsvorrichtung (20) miteinander elektrisch verbindbar oder verbunden sind, **dadurch gekennzeichnet, dass**
die Zellkontaktierungsvorrichtung (20) gemäß einem der vorhergehenden Ansprüche ausgebildet ist.

## Revendications

1. Dispositif électromécanique de mise en contact de cellules (20) pour un module de batterie (1) d'une batterie (0) d'un véhicule à moteur, en particulier pour un module de batterie de traction (1) d'une batterie de traction (0) d'un véhicule hybride ou à moteur électrique, dans lequel
le dispositif de mise en contact de cellules (20) comprend un support de connexion de cellules mécanique (200) qui peut être monté sur des modules d'accumulateurs (10) du module de batterie (1) et une pluralité de feuilles de connexion de cellules électromécaniques (300), **caractérisé en ce que**
le dispositif de mise en contact de cellules (20) est formé de telle manière que la pluralité de feuilles de connexion de cellules (300) peuvent être installées ou sont installées sur/dans le support de connexion de cellules (200), dans lequel une feuille de connexion de cellules (300) correspondante peut être montée ou est montée sur/dans le support de connexion de cellules (200) au moyen d'au moins un agencement d'encliquetage (205) du support de connexion de cellules (200), moyennant quoi la feuille de connexion de cellules (300) peut être installée ou est installée dans des sections sur/dans le support de connexion de cellules (200) sensiblement par ajustement de forme.

2. Dispositif électromécanique de mise en contact de cellules (20) selon la revendication précédente, **caractérisé en ce que** :
• la feuille de connexion de cellules (300), sur deux de ses côtés opposés l'un à l'autre, peut être installée ou est installée dans chaque cas dans des sections sur/dans le support de connexion de cellules (200) sensiblement par ajustement de forme,
• la feuille de connexion de cellules (300), en outre sur son troisième côté et facultativement en outre sur son quatrième côté, peut être installée ou est installée dans chaque cas dans des sections sur/dans le support de connexion de cellules (200) sensiblement par ajustement de forme, et/ou
• l'agencement d'encliquetage (205) est formé de telle manière, et/ou une liaison par ajustement de forme entre la feuille de connexion de cellules (300) et le support de connexion de cellules (200) permet, que des tolérances de position des pôles de cellules électromécaniques (111, 112) des modules d'accumulateurs (10) peuvent être compensées.

3. Dispositif électromécanique de mise en contact de cellules (20) selon l'une des revendications précédentes, **caractérisé en ce que** :
• le support de connexion de cellules (200) s'étend de manière plane sensiblement dans une direction longitudinale (Lr) et une direction transversale (Qr) du dispositif de mise en contact de cellules (20),
• la feuille de connexion de cellules (300) peut être installée ou est installée sur/dans le dispositif de mise en contact de cellules (20) sensiblement par un mouvement linéaire dans une direction longitudinale (Lr), une direction transversale (Qr) et/ou une direction verticale (Hr) du dispositif de mise en contact de cellules (20), et/ou
• la feuille de connexion de cellules (300) peut être installée ou est installée sur/dans le dispositif de mise en contact de cellules (20) sensiblement par un mouvement rotatif autour d'un axe longitudinal (Lr), un axe transversal (Qr) et/ou un axe vertical (Hr) du dispositif de mise en contact de cellules (20).

4. Dispositif électromécanique de mise en contact de cellules (20) selon l'une des revendications précédentes, **caractérisé en ce que** le support de connexion de cellules (200) et la feuille de connexion de cellules (300) sont formés l'un par rapport à l'autre de telle manière que, lors du montage de la feuille de connexion de cellules (300) sur/dans le support de connexion de cellules (200),
la feuille de connexion de cellules (300) peut d'abord être placée (I) avec une bordure extérieure (302), en particulier une bordure longitudinale extérieure (302), au niveau de/sur le support de connexion de cellules (200), puis peut pivoter (II) sur le support de connexion de cellules (200) vers et dans celui-ci, et ensuite (III) peut être déplacée dans le plan du support de connexion de cellules (200).

5. Dispositif électromécanique de mise en contact de cellules (20) selon l'une des revendications précédentes, **caractérisé en ce que** l'agencement d'encliquetage (205) comprend au moins un mécanisme de verrouillage sensiblement à ressort (220) et au moins un dispositif de verrouillage sensiblement rigide (210), dans lequel
la feuille de connexion de cellules (300) peut être installée ou est installée entre le mécanisme de verrouillage à ressort (220) et le dispositif de verrouillage rigide (210), dans lequel le mécanisme de verrouillage (220) et le dispositif de verrouillage (210) sont formés pour interagir de telle manière que la feuille de connexion de cellules (300) ne peut pas tomber du support de connexion de cellules (200).

6. Dispositif électromécanique de mise en contact de cellules (20) selon l'une des revendications précédentes, **caractérisé en ce que** :
• le support de connexion de cellules (200) comprend au moins un cadre de support (204), sur/dans lequel l'au moins une feuille de connexion de cellules (300) peut être montée ou est montée au moyen de l'au moins un agencement d'encliquetage (205),
• le cadre de support (204) est fourni sur une barre de base (202) du support de connexion de cellules (200), dans lequel la barre de base (202) peut être fournie ou est fournie de préférence entre les deux pôles de cellules (111, 112) respectifs des modules d'accumulateurs (10), et/ou
• le cadre de support (204) est formé au moins partiellement ou totalement de manière circonférentielle, avec la barre de base (202) comme un côté.

7. Dispositif électromécanique de mise en contact de cellules (20) selon l'une des revendications précédentes, **caractérisé en ce que** :
• le mécanisme de verrouillage à ressort (220) a un ressort de verrouillage (222) qui peut être chargé par ressort dans la direction transversale (Qr) ou la direction longitudinale (Lr),
• le/un ressort de verrouillage (222) est installé pour pouvoir être chargé par ressort sensiblement parallèlement à la direction transversale (Qr) ou à la direction longitudinale (Lr),
• le/un ressort de verrouillage (222) est formé sur la barre de base (202) ou le cadre de support (204), et/ou
• le/un ressort de verrouillage (222) est formé comme un ressort à lame (222), en particulier un ressort à lame monocouche (222).

8. Dispositif électromécanique de mise en contact de cellules (20) selon l'une des revendications précédentes, **caractérisé en ce que** :
• une section d'extrémité longitudinale fixée (225) d'un bras de ressort (224) du ressort de verrouillage (222) est reliée au support de connexion de cellules (200),
• un dispositif de verrouillage sensiblement rigide (229) est fourni sur une section d'extrémité longitudinale libre (227) d'un/du bras de ressort (224), et/ou
• une région de ressort sensiblement à ressort (226) du bras de ressort (224) est formée comme une section d'arc (226) du ressort de verrouillage (222).

9. Dispositif électromécanique de mise en contact de cellules (20) selon l'une des revendications précédentes, **caractérisé en ce que** :
• le mécanisme de verrouillage à ressort (220) comprend une pluralité de ressorts de verrouillage (222),
• les ressorts de verrouillage (222) sont interconnectés mécaniquement au niveau de leurs sections d'extrémité longitudinales libres (227) ou les bras de ressort (224) sont interconnectés mécaniquement par l'intermédiaire d'une barre de liaison (228), et/ou
• la barre de liaison (228) a un/le dispositif de verrouillage sensiblement rigide (229) unique ou une pluralité de dispositifs de verrouillage sensiblement rigides (229).

10. Dispositif électromécanique de mise en contact de cellules (20) selon l'une des revendications précédentes, **caractérisé en ce que** :
• le dispositif de verrouillage rigide (210) est formé comme une saillie (212) ou un épaulement s'étendant dans la direction transversale (Qr) ou la direction longitudinale (Lr),
• la saillie (212) ou l'épaulement est formé sur le cadre de support (204) ou la barre de base (202),
• la saillie (212) est formée comme un support (212), en particulier un support monocouche (212), et/ou
• les deux sections d'extrémité longitudinales fixées (214, 216) du support (212) sont reliées au support de connexion de cellules (200).

11. Dispositif électromécanique de mise en contact de cellules (20) selon l'une des revendications précédentes, **caractérisé en ce que** :
• la feuille de connexion de cellules (300) comprend une pluralité de mécanismes de mise en contact électromécaniques (310) et de régions de pontage mécaniques (320) en alternance les uns avec les autres,
• les régions de pontage (320) sont formées comme des mécanismes de compensation mécanique et thermique (320) de la feuille de connexion de cellules (300),
• le mécanisme de mise en contact (310) respectif a un évidement de mesure (311) et/ou une région de soudage (313), et/ou
• la feuille de connexion de cellules (300) a un mécanisme de prise de courant (312) de la feuille de connexion de cellules (300) sur au moins l'un de ses mécanismes de mise en contact marginaux (310).

12. Dispositif électromécanique de mise en contact de cellules (20) selon l'une des revendications précédentes, **caractérisé en ce que** :
• le cadre de support (204) a au moins une fenêtre (242) ou une pluralité de fenêtres (242), dans lesquelles dans chaque cas au moins un mécanisme de mise en contact (310) peut être logé,
• le cadre de support (204) comprend une pluralité de fenêtres (242) et de barres (244) en alternance les unes avec les autres dans le cadre de support (204), et/ou
• une région de pontage (320) correspondante ou un mécanisme de compensation (320) correspondant peut être reçu ou est reçu sur une barre (244) respective.

13. Dispositif électromécanique de mise en contact de cellules (20) selon l'une des revendications précédentes, **caractérisé en ce que**, au moins en raison d'un trajet de ressort du mécanisme de verrouillage à ressort (220), un jeu mécanique de la feuille de connexion de cellules (300) existe dans la direction transversale (Qr) ou la direction longitudinale (Lr), et/ou
un jeu mécanique entre le dispositif de verrouillage rigide (210) et la feuille de connexion de cellules (300), dans la direction verticale (Hr), est supérieur ou égal à un jeu mécanique entre le mécanisme de verrouillage à ressort (220) et la feuille de connexion de cellules (300).

14. Dispositif électromécanique de mise en contact de cellules (20) selon l'une des revendications précédentes, **caractérisé en ce que** :
• le support de connexion de cellules (200) est formé comme une pièce moulée, en particulier une pièce moulée par injection,
• un système de capteur et/ou un ensemble électronique est intégré dans le support de connexion de cellules (200),
• un canal de câble est intégré dans le support de connexion de cellules (200),
• la feuille de connexion de cellules (300) est formée comme une pièce emboutie, en particulier une pièce pliée emboutie, et/ou
• la feuille de connexion de cellules (300) peut en outre être installée ou est installée dans des sections sur/dans le support de connexion de cellules (200) par emmanchement au moyen de l'agencement d'encliquetage (205).

15. Module de batterie (1) ou batterie (0) pour un véhicule à moteur, en particulier un module de batterie de traction (1) ou une batterie de traction (0) pour un véhicule hybride ou un véhicule à moteur électrique, dans lequel
des modules d'accumulateurs (10) du module de batterie (1) ou de la batterie (0) peuvent être reliés électriquement ou sont reliés électriquement les uns aux autres au moyen d'un dispositif électromécanique de mise en contact de cellules (20) agencé sur ceux-ci, **caractérisé en ce que**
le dispositif électromécanique de mise en contact de cellules (20) est formé selon l'une des revendications précédentes.
